# EUROPEAN PATENT SPECIFICATION

(11) **EP 1 611 982 B1**
(45) Date of publication and mention of the grant of the patent: **07.04.2010**
(21) Application number: 04076898.8
(22) Date of filing: 01.07.2004
(51) Int. Cl.: B23D 77/02, B23P 15/46

(54) **Reaming tool**
Reibwerkzeug
Alésoir

(43) Date of publication of application: 04.01.2006
(73) Proprietor: Unimerco A/S, 7451 Sunds (DK)
(72) Inventor: Widhalm, Samuel T., Dexter, MI 48130 (US); Mann, Gary M., Dexter, MI 48130 (US); Jensen, Per Holm, 7451 Sunds (DK)
(74) Representative: Plougmann & Vingtoft A/S

(56) References cited:
- EP-A- 0 054 510
- EP-A- 0 365 218
- DE-A- 2 910 828
- FR-A- 1 164 632
- FR-A- 1 386 344
- FR-A- 2 654 663
- GB-A- 2 085 769
- US-A- 4 086 733
- US-A- 4 932 815
- AGARICO J: "REIBWERKZEUGE AUS EINEM GUSS" WERKSTATT UND BETRIEB, CARL HANSER VERLAG. MUNCHEN, DE, vol. 134, no. 7/8, August 2001 (2001-08), pages 44,46-47, XP001101261 ISSN: 0043-2792
- PATENT ABSTRACTS OF JAPAN vol. 014, no. 097 (M-0940), 22 February 1990 (1990-02-22) -& JP 01 306122 A (G N TOOL KK), 11 December 1989 (1989-12-11)

## Description

### FIELD OF THE INVENTION

The invention relates to a reaming tool having on its enveloping surface substantially helical flutes, into which high hardness cutting materials are brazed or soldered, . Reaming tools are used for the fine machining of bore holes and therefore require a precise arrangement and design of chip removal elements and other elements in contact with the bore hole. In particular, a high degree of dimensional accuracy is necessary. Reaming tools have already been known in which the chip removal elements are set into a base body, for example by brazing or by adhesion.

### BACKGROUND OF THE INVENTION

It is known from milling tools to use base bodies with groove-shaped recesses extending along an enveloping surface, and into which very hard cutting materials, such as a Poly-Crystalline Diamond (PCD) material or a Cubic Boron Nitride (CBN) material, are sintered or soldered. Such blanks for milling tools may be processed by a spark erosion process in order to produce the milling tools.

The use of blanks with high hardness cutting materials provided in helical flutes and extending around the enveloping surface appears to be erroneous compared to milling tools. Milling tools in which the use of blanks is known are used for machining work-pieces in an XY plane. The milling tool has, along its rotation axis, peripheral cutting elements constituted as a main cutter and coming into use in milling machining. Furthermore, end millers operate at relatively high cutting speeds and depths of cut, so that quite other forces act on a head of an end miller. Also, when being milled, the work-piece is often very securely attached to the working machine. Furthermore, the longitudinal axial extension of the milling tool compared to the diameter of the milling tool often exhibits a ratio very different to a corresponding ratio of a reaming tool.

In reaming tools, on the contrary, the machining and the chip formation are determined by completely different parameters and dimensions. In reaming machining, the bore hole is machined exclusively in the Z-direction, and machining in the X- and Y-directions is neither provided, nor possible. For the use of reaming tools, because of the forces, parameters and requirements which deviate from milling technology, the use of high hardness cutting material appear to be erroneous to form the reaming tool by means of a body, which has on its enveloping surface substantially helical flutes into which high hardness cutting material is sintered or soldered.

US 6,290,438 describes a reaming tool having a shaft and a shaped head with at least one cutter. The shaped head is produced from a blank having a base body of a base material on its envelope surface with at least one rectilinear or helical groove-shaped recess running around it, into which high hardness cutting material is sintered.

US 6,575,674 of the same inventor describes a reaming tool having a shaft and a shaped head with at least one cutter. The shaped head is produced from a blank having a base body of a base material on its envelope surface with at least one rectilinear or helical groove-shaped recess running around it, into which high hardness cutting material is sintered. The high hardness cutting material includes at least one cutter having cutting surfaces formed by the introduction of a chip groove by a grinding wheel into the base body and movement of the grinding wheel toward the high hardness cutting material.

EP 0 365 218 which represents the closest prior art discloses a poly-crystal diamond fluted tool according to the preamble of claim 1 which is capable of effecting working with high accuracy and long life. The tool is particularly suitable for finishing working with high accuracy and is provided by forming a poly-crystal diamond film on the surface of a substrate subjected to helical grinding by a vapour phase synthesis method, then subjecting the product to a chemical treatment to dissolve and remove only the substrate, brazing the resulting poly-crystal diamond film In a fluted form to at least a part of the rake face of a tool base metal subjected to helical grinding in the similar manner to the substrate and then subjecting the brazed tool base metal to working of a flank face to form a cutting edge. Removal of cutting chips and bore contaminants such as impurities other than chips and any lubricant is performed only by the helical flutes.

JP 1-306122 discloses a tool with a land being split into a plurality of land sections through a twisted groove which is different from a twisted groove forming the land. Cutters are provided with nickes, said nickes being provided at respective land sections, Cutting operation is shared by respective cutters, thus reducing the cutting resistance and promoting radiation of cutting heat. A twisted cutter provided at the cutting side land section mainly performs cutting of material, and cutting chips are discharged through the twisted groove. Twisted cutters arranged at other land sections mainly perform burnishing and cutting chips are discharged smoothly through the twisted groove. Removal of bore contaminants is performed by the helical flutes. Removal of cutting chips and bore contaminants such as impurities other than chips and any lubricant is performed only by either the main twisted grooves forming the land or by the other twisted grooves.

It is experienced that all of the known reaming tools expose the work-piece to vibrations having a great negative influence on the quality of the reaming process. This is especially the case, where the reaming process extends over a relatively long distance, and also where the work-piece is difficult to properly fix and/or is of a relatively light material.

### SUMMARY OF THE INVENTION

It is an object of the invention to provide a reaming tool and a process for the manufacture of such reaming tool, which ensures that the tool can be manufactured cost-effectively and satisfies the high quality requirements of such tools and of the work-piece being worked.

This object may be obtained by a reaming tool with the features of claim 1. Such a reaming tool has on its enveloping surface substantially helical flutes, into which high hardness cutting materials are brazed or soldered. The reamer base body is provided with at least one helical guide pad in the base material along its circumferential surface. The at least one high hardness cutting element is attached to the base body by a joint consisting of brazing or soldering.

A cost-favourable manufacture of a reaming tool is provided. It is necessary to accommodate insertion of seatings for the high hardness chip removal elements. The invention makes it possible for the shaft and the head of the reaming tool to be made of solid carbide metal, the shaft and the head preferably constituting the one and same integrate body.

By the provision of a reaming tool according to the present invention, the constitution of a reaming tool with helical flutes is obtained not previously having been possible. A single cutter reaming tool can be provided, in which both the chip removal element and also the helical flute is twisted either in a right-hand twist or a left-hand twist. A considerable improvement is obtained as regards the processing quality, the speed, and also the durability of the tool. This is based on the fact that the chip removal elements are soldered or brazed into the base body of the head initially shaped with the helical flutes, so that a material joint of high quality is provided compared to other joints. Although soldered joints and the production of seatings for plates are preferred, brazed joints are also possible for attaching the previously manufactured hard material plate to the already manufactured helical flute.

By providing helical guide pads in the base material along the circumferential surface, an improved working is obtained of the inner circumference of the bore hole. Especially, it has been observed that the combination of a high hardness cutting material, In contrast to just a hard metal cutting material, and guide pads, in contrast to just a smooth circumferential surface, significantly improves the accuracy of the finally worked bore hole.

The improved accuracy is not only obtained because of an improved removal of chips from the working zone of the reaming tool, but the improved accuracy is also obtained because of a significant reduction of vibrations of the work-piece, when utilising the reamer.

According to a preferred embodiment of the invention, said at least one high hardness cutting element comprises at least one of the following materials: A Poly-Crystalline Diamond (PCD) material and a Cubic Boron Nitride (CBN) material. The choice of either or both of these materials may be specific to the application, corresponding to the material to be machined, such as for example the machining of non-ferrous metals like aluminium alloys or the like less hard materials. The at least one helical flute may be constituted as either right-twisted or left-twisted. A right-twisted helical flute results in the chips being directed rearwards in relation to a foremost end of the reaming tool and a left-handed twist results in the chips being directed forwards in relation to the foremost end of the reaming tool.

According to a further embodiment of the invention, a cross-section of said at least one helical flute, when viewed along a longitudinal extension of the helical flutes, is selected from at least one of the following geometries: semi-circular flutes, V-shaped flutes and right-angled flutes. Depending on the material of the work-piece, which the reaming tool is intended for working, and depending on the chip size being cut by the reaming tool, a selected cross-sectional shape of the helical flute may be employed.

According to a preferred embodiment of the invention, at least two helical flutes are provided, and at least two helical guide pads are provided, and at least one first guide pad is provided between said at least two helical flutes along a first part of the circumferential surface, and at least one other guide pad is provided between said at least two helical flutes along a second part of the circumferential surface.

In a preferred embodiment of the invention, said reamer base body is provided with at least one swarf channel being provided in the base material along said circumferential surface. More preferably, at least two helical flutes are provided, and at least two swarf channels are provided, and at least one first swarf channel is provided between said at least two helical flutes along a first part of the circumferential surface, and where at least one other swarf channel is provided between said at least two helical flutes along a second part of the circumferential surface.

By providing swarf channels in the base material along the circumferential surface, an improved working is obtained of the inner circumference of the bore hole. Especially, it has been observed that the combination of a high hardness cutting material, in contrast to just a hard metal cutting material, and swarf channels, in contrast to no swarf channels, significantly improves the accuracy of the finally worked bore hole. The improved accuracy is obtained because of an improved removal of chips from the working zone of the reaming tool, and the improved accuracy Is especially obtained during working of deep closed bore holes, where the working zone of the reaming tool Is at some times very distant to an orifice of the bore hole, said orifice being the outlet of the chips from the working zone.

By providing both guide pads and swarf channels in the base material along the circumferential surface, an improved working is obtained of the inner circumference of the bore hole. Especially, it has been observed that the combination of a high hardness cutting material, in contrast to just a hard metal cutting material, and guide pads, in contrast to just a smooth circumferential surface, and swarf channels, in contrast to no swarf channels, more significantly improves the accuracy of the finally worked bore hole.

The at least one guide pad and/or the at least one swarf channel may extend transversely along at least one of the following helical orientations: right-hand twist and left-hand twist. Right-twisted guide pads result in the chips being directed rearwards in relation to a foremost end of the reaming tool and left-twisted guide pads result in the chips being directed forwards in relation to the foremost end of the reaming tool. Right-twisted swarf channels result in chips being directed from a leading helical flute to a trailing helical flute seen in the rotational direction of the reaming tool, and left-twisted swarf channels result in chips being directed from a trailing helical flute to a leading helical flute seen in the rotational direction of the reaming tool. The latter embodiment would appear contradictory to the object of successful swarf evacuation, but in special situations the possibility exists of employing such an embodiment.

The cross-section of the guide pads and/or of the swarf channels, when viewed along a longitudinal extension of the at least one guide pad and/or swarf channel, may be selected from at least one of the following geometries: semi-circular swarf channel, V-shaped swarf channel, rectangular swarf channel and trapezoidal swarf channel.

Depending on the material of the work-piece being worked and depending on the size of the chips and also depending on the amount of and viscosity of the possible cooling and/or lubricating fluid being applied, different cross-sections of the guide pads and/or the swarf channels may be applied. The application of any selected cross-section will adopt the teaching of larger and flow-improving cross-sections being applied, when the chips are relatively large and/or the viscosity is relatively high of the cooling and/or lubricating fluid and vice versa in relation to smaller chips and lower viscosity of the fluid.

A preferred embodiment according to the invention is provided with at least two helical flutes, and the at least two helical flutes are uniformly distributed over the periphery of said reamer head. It is also possible for the at least two helical flutes to be non-uniformly distributed over the periphery of said reamer head.

According to preferred embodiment of the invention, when being provided with helical guide pads, the invention is provided with at least two helical guide pads and the helical guide pads are uniformly distributed over the circumferential surface of said reamer head. It is also possible for the at least two helical flutes to be non-uniformly distributed over the periphery of said reamer head.

The different embodiments according to the invention are especially suited for unstable work-pieces and unstable work-piece fixture, and in work-pieces having a thin wall thickness or in work-pieces of a relatively light material such as aluminium alloy castings. All embodiments are reaming tools, in dependence on the features employed, suitable for working work-pieces that require a minimal tolerance limit for diameter and/or roundness of the bore hole being worked.

### BRIEF DESCRIPTION OF THE FIGURES

The invention will hereafter be described with reference to figures, where
fig. 1 is a perspective view of a possible embodiment of a reaming tool according to the invention,
fig. 2 is a plane view of swarf channels and guide pads and a close-up view of guide pads for a reaming tool according to the invention,
fig. 3A-3C are plane views of reaming steps and angular directions of cutting elements for a reaming tool according to the invention,
fig. 4A-4D are plane views and close-up views of cutting elements for a reaming tool according to the invention,
fig. 5A-5B are a plane view and a close-up view of a swarf channel for a reaming tool according to the invention,
fig. 6A-6D are plane views and close-up views of cutting elements and guide pads of a reaming tool according to the invention during a reaming process, and
fig. 7A-7B are plane views and a close-up views of helical flutes and swarf channels of a reaming tool according to the invention during a reaming process.

### DETAILED DESCRIPTION OF THE INVENTION

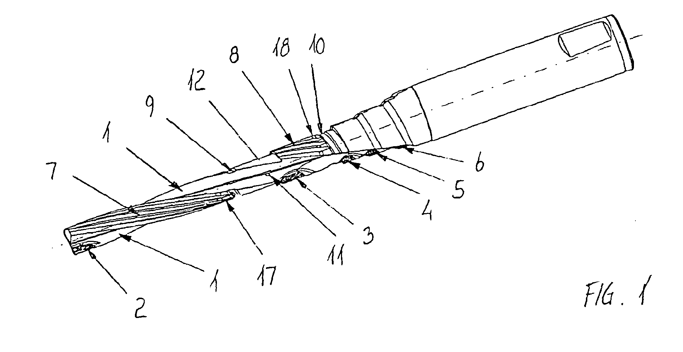

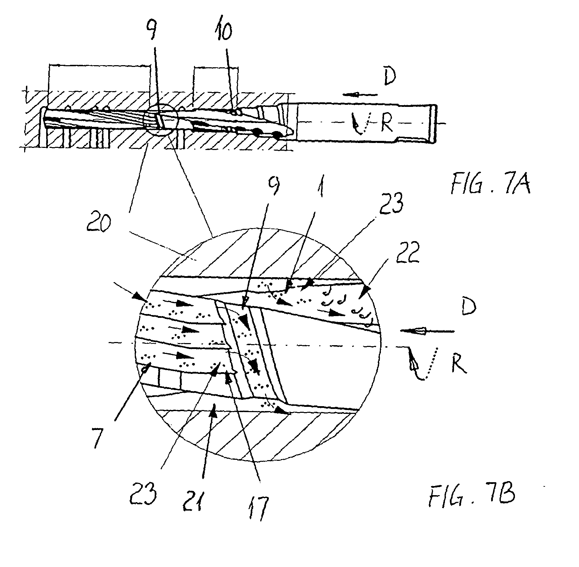

Fig. 1 shows an embodiment of a reaming tool provided with two helical flutes 1 and with high hardness cutting elements 2,3,4,5,6 provided in different reaming steps as part of the reaming tool. In the embodiment shown, the reaming tool - apart from the helical flutes 1 and the high hardness cutting elements 2,3,4,5,6 - is provided with so-called guide pads 7,8, and with so-called swarf channels 9,10. The embodiment of the reaming tool is also provided with coolant holes for providing cooling liquid to the reaming process. The high hardness cutting elements are divided into a cutting element 2 in a initial reaming step and additionally high hardness cutting elements 3,4,5,6 for reaming in a work-piece (see fig. 7A-7B) of secondary holes with larger diameters and provided in extension of a primary hole having the smallest diameter in the work-piece. Such secondary holes may be holes provided in the work-piece for insertion of bearings and/or seals for any axle or rod extending through the primary hole, e.g. an axle in a gearbox or a rod in a gear shift mechanism.

The high hardness cutting elements 2,3,4,5,6 are inserted into a base material of a base body 12 of the reaming tool. The insertion is established by soldering or brazing. The high hardness cutting elements 2,3,4,5,6 are manufactured separately from the manufacture of the base body 12 of the reaming tool, and the high hardness cutting elements 2,3,4,5,6 are inserted subsequently into the helical flutes 1, which are provided in the base body 12. Thus, the high hardness cutting elements 2,3,4,5,6 are manufactured by use of manufacturing equipment especially suited for manufacture of high hardness cutting elements, and the base body 12, which is preferably made of hard metal having a hardness being limited in comparison to the hardness of the high hardness elements, is manufactured by use of manufacturing equipment especially suited for the manufacture of such base bodies.

Only subsequently to the individual manufacture of the high hardness cutting elements 2,3,4,5,6 and the individual manufacture of the base body 12 with helical flutes 1, are the base body 12 and the high hardness cutting elements 2,3,4,5,6, mutually attached. Perhaps a final shaping of the high hardness cutting elements 2,3,4,5,6 are provided in order to assure a smooth transition from the substantially linear extension of the surface of the high hardness cutting elements 2,3,4,5,6 towards the course of the helical flute 1. The cross-section of the helical flutes 1 may be either one of the following cross-sections: semi-circular flutes, V-shaped flutes and right-angled flutes. Preferably, the helical flutes 1 are V-shaped or right-angled so that chips being cut are better directed along the flutes.

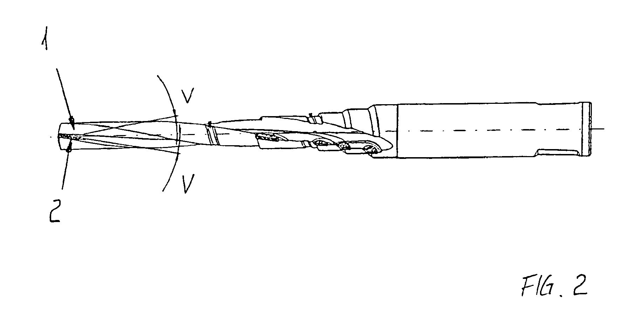

Fig. 2 shows the angular direction V of the high hardness cutting element 2. The high hardness cutting element 2 has a substantially linear extension, in contrast to the helical extension of the helical flutes. However, the high hardness cutting elements 2 are inserted into the helical flutes 1 so as to establish a near-most helical extension of the cutting element 2. This is achieved by adjusting the angular direction V (see fig. 2) of the cutting element 2 so that the linear extension of the cutting element 2 at some point is directed substantially tangentially to the helical course of the helical flute 1. After adjusting the angular direction V (see fig. 1) of the cutting element 2 during insertion of the cutting element 2 into the helical flute 1, a final shaping of the high hardness cutting element may be provided so as to establish a smooth transition between the high hardness cutting element 2 and the part of the helical flute 1 just following the element.

Using a positively or negatively angled helical flute, i.e. a right-hand twist or left-hand twist, together with the high hardness cutting element extending tangentially to the helical twist produces less radial and axial thrust forces on the work-piece when being machined. Thus, a better bore hole roundness is obtained. Also, less radial and axial thrust forces on the work-piece when being machined leads to a more stable machining process and vibrations are reduced to a minimum. Furthermore, increased tool durability is obtained compared to conventional tools having high hardness cutting elements.

The helical flutes 1 and the high hardness cutting elements 2 may exhibit a positive angle or a negative angle, i.e. a right-hand twist or a left-hand twist. A positive angle of the high hardness cutting elements 2 creates a shear, which together with a corresponding positive angle of the helical flutes 1, directs the chips out of the bore hole in the work-piece towards the head of the reaming tool, opposite a longitudinal machining direction D of the reaming tool. A negative angle of the high hardness cutting elements creates a shear, which together with a corresponding negative angle of the helical flutes in the reamer shaft, directs the chips out of the bore hole forwards towards the tip of the reamer, in the machining direction of the reaming tool. Such an embodiment is possible if the bore hole is through-going. The angle, whether positive or negative, may have a value between 10° and 45°, preferably between 5° and 20°.

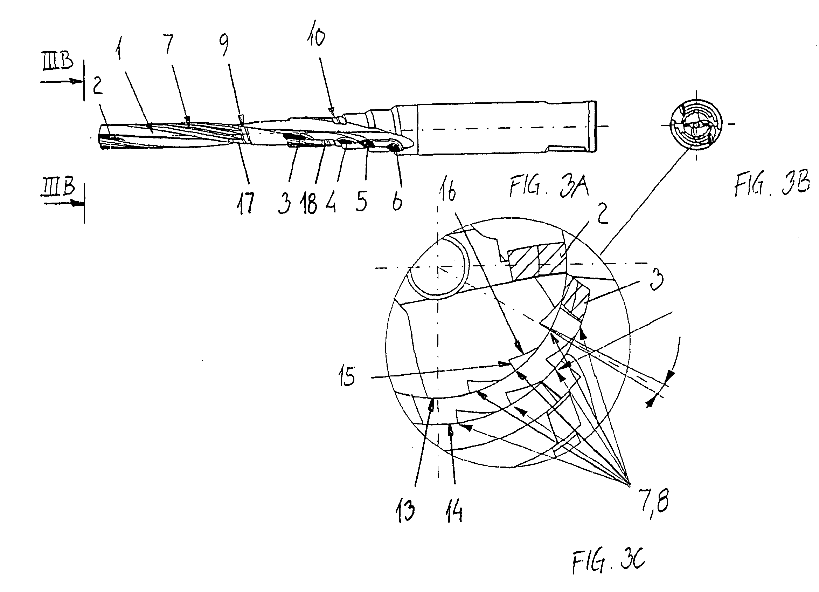

Fig. 3A-3C especially show a close-up view of the guide pads 7,8 provided at circumferential surfaces 13,14 of the shaft of the reaming tool. The guide pads 7,8 are provided along circumferential surfaces 13,14 situated between opposing helical flutes 2. Three guide pads 7,8 are provided on each of the two individual circumferential surfaces 13,14. Other numbers from one to perhaps four guide pads or more may be provided on each of the two individual circumferential surfaces. Each of the guide pads 7,8 on each of the circumferential surfaces 13,14 extends helically with the same helical twist as a helical twist of the helical flutes 1. The guide pads 7,8 are preferably made in a solid carbide surface of the shaft of the reaming tool. The guide pads 7,8 are provided for scraping off, from the inner circumference of the bore hole, particles other than the chips formed by the high hardness cutting elements, such chips being directed along the helical flutes.

Each of the guide pads 7,8 has an outlet 17,18 leading to a swarf channel 9,10 (see later sections of the description). However, different courses than a helical twist may be envisaged, and the helical twist may be different than the helical twist of the helical flutes. Such different embodiments may cause the guide pads to not leading to the swarf channels (if swarf channels are present at all), but instead leading to one of the helical flutes at any point along the extension of the helical flutes. The function of the guide pads are still the same of such different embodiments of the guide pads, i.e. scraping off particles from the inner circumference of the circumference of the bore hole.

The guide pads 7,8 are provided by recesses ground into the base materiel of the base body of the shaft of the reaming tool, and the guide pads 7,8 have a saw-tooth shaped cross-section. The up-right side 15 of the recesses is directed in the rotational direction R of the reaming tool, and the sloping side 16 of the recesses is directed away from the rotational direction of the reaming tool, i.e. the up-right side 15 is the leading side of the recesses, and the sloping side 16 is the trailing side of the recesses. Thus, the up-right side 15 has a scraping effect on the inner circumference of the bore hole during the reaming process, scraping off coolant liquid and any particles other than chips, such coolant liquid and possible particles not being directed out of the bore hole along the helical flutes. The guide pads promote better chip flow towards the helical flutes. Thus, a minimum of contaminants will be flowing along the guide pads, thereby promoting longer tool durability and higher quality of the bore hold of the work-piece. Also, the helical guide pads add stability during the machining process and thus reduce the risk of generating chatter marks or elliptical cutting patterns on the internal circumference of the bore hole.

In the embodiment shown, the initial reaming step with the high hardness cutting element 2 is considered the initial reaming step. Apart from the cutting element 2, this reaming step is also provided with guide pads 7 and swarf channels 9. The embodiment also shows additional reaming steps, among those the immediate subsequent reaming step with the high hardness cutting element 3. Also this reaming step is provided with guide pads 8 and swarf channels 10. However, different embodiments could be envisaged.

If the bore hole itself, already from a previous manufacturing process, has the correct dimension and fulfils the necessary tolerances, the reaming step with the cutting element 2 may be dispensed with. Instead, the reaming step with the cutting element 3 becomes the initial reaming step, preferably, but not necessarily, provided with guide pads and perhaps also swarf channels. Even additional reaming steps may be provided also.

Thus, in such an embodiment, the foremost end of the reamer is intended for aligning the reaming tool in the bore hole, but the foremost end of the reaming tool does not have any cutting means and thus does not provide any cutting of the bore hole. The reaming step with the cutting element 3 is then, as already described, used for reaming a bore hole with an enlarged diameter compared to the bore hole having the smallest diameter.

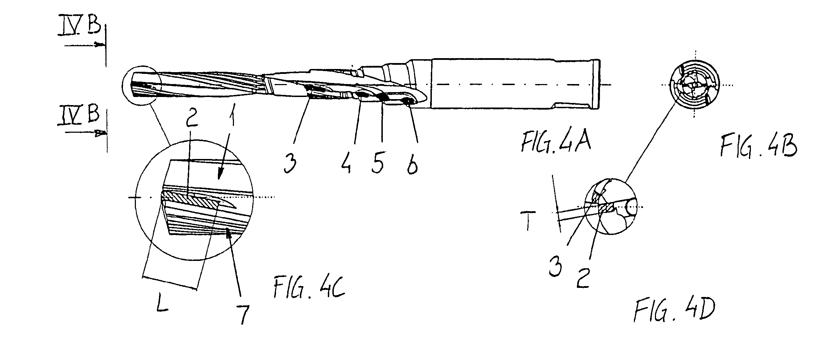

Fig 4A-4D show close-up views of the longitudinal linear extension L and of the thickness of the high hardness cutting element. The longitudinal extension L is between 1 mm and 20 mm, depending on the geometry of the work-piece to be machined by the reaming tool. The thickness T of the high hardness cutting element 2 is between 0.3 mm and 5.0 mm depending on the diameter of the reaming tool, the step length and the expected cutting force the tool will be exposed to. Also, the material of the work-piece to be machined influences the choice of thickness of the high hardness cutting element. Both the length L of the high hardness cutting element 2 and the thickness T of the high hardness cutting element 2 are also influenced by the choice of high hardness cutting material, such as the high hardness cutting material being Poly-Crystalline Diamond (PCD) or Cubic Boron Nitride (CBN).

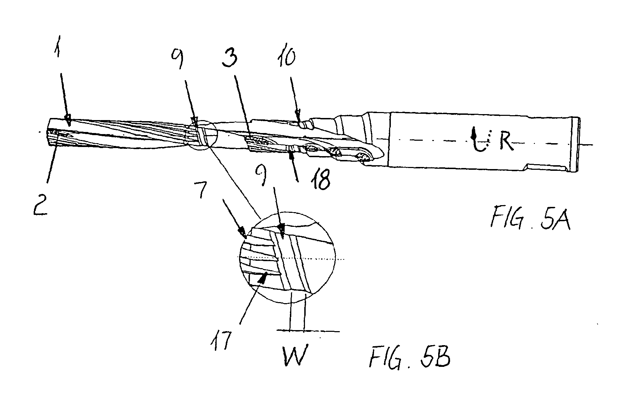

Fig 5A-5B show an embodiment of a swarf channel 9. As previously mentioned, the swarf channels 9,10 are positioned at outlets 17,18 of the guide pads 7,8. The swarf channels 9,10 are intended for directing the coolant liquid and any particles, which are scraped off by the guide pads 7,8 from the inner circumference of the bore hole, further on to the helical flutes 1. In the embodiment shown, the swarf channels 9,10 are provided on each of the circumferential surfaces 13,14. The swarf channels 9,10 extend slightly helical, almost linearly, from one helical flute to the other helical flute. Any coolant liquid and/or particles being passed from the outlets 17,18 of the guide pads 7,8, will be passed further on by the swarf channels 9,10 to the helical flute 1 onto which the swarf channels lead.

The swarf channels 9,10 may exhibit a positive angle or a negative angle. A positive angle of the swarf channels directs the coolant liquid and the particles from the guide pads 7,8 to the trailing helical flute 2, i.e. the helical flute "following" the guide pads when viewed in the circumferential machining direction R of the reaming tool. A negative angle of the swarf channels 9,10 directs the coolant liquid and the particles from the guide pads 7,8 to the leading helical flute 2, i.e. the helical flute "in advance of" the guide pads when viewed in the circumferential machining direction R of the reaming tool.

The angle, whether positive or negative, may have a value between 1° and 89°, preferably between 1° and 20°. The width of the swarf channels 9,10 measured at the bottom of the swarf channels may be between 1 mm and 15 mm. The cross-section of the swarf channels may be rectangular, semicircular or trapezoidal as shown in the embodiment of fig. 5B. The choice of cross-section depends on the material of the work-piece to be machined and depends on the coolant liquid being used during machining. The swarf channels together with the guide pads promote flow of coolant liquid along the guide pads and thus reduce friction. Also, the swarf channels together with the guide pads promote clearing of chips from the helical flutes and promote clearing of particles from the guide pads. If the swarf channels are not present, the guide pads may exhibit a higher risk of packing with chips, particles and contaminants, which may cause tool failure.

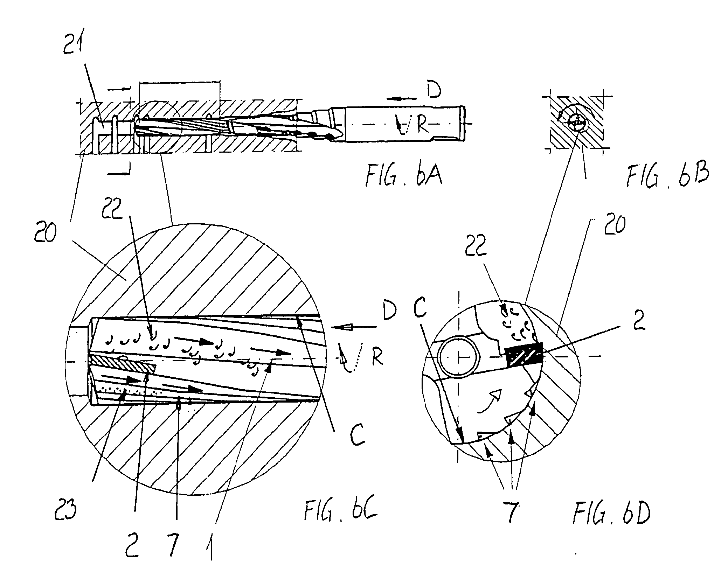

Fig 6A-6D show close-up views of the tip of a reaming tool during machining a work-piece 20. The work-piece 20 may be a part for a gearbox, possibly made of aluminium. The work-piece 20 is provided with a bore hole 21. The chips 22 being machined are cut by the high hardness cutting elements 2 and are directed along the helical flutes 1 in a direction opposite to a longitudinal machining direction D of the reaming tool, when the reaming tool is rotated in the circumferential machining direction R shown. The direction of the chips opposite to the longitudinal machining direction D is established due to the right-hand twist of the helical flutes 1. If the helical flutes had a left-hand twist, the chips would be directed in the same direction as the longitudinal machining direction D.

Apart from the chips, any other particles 23 such as impurities in the material of the work-piece together with coolant liquid and any impurities in the coolant liquid are scraped off the inner circumference C of the bore hole 21 by means of the guide pads 7,8. In the embodiment shown, the guide pads 7,8 are directed along the same helical twist as the helical flutes 1. Thus, the direction of the particles 23 is also opposite to the longitudinal machining direction D due to the right-hand twist of the guide pads 7,8. If the guide pads had a left-hand twist, the particles would be directed in the same direction as the longitudinal machining direction D.

Fig 7A-7D show close-up views of the shaft of a reaming tool during machining a work-piece 20 and at the position of one of the swarf channels 9. The chips 22 from the work-piece being machined are cut by the high hardness cutting elements 2 at the tip of the reaming tool (see fig 6A-6D). The other particles 23 such as impurities in the material of the work-piece together with coolant liquid and any impurities in the coolant liquid are scraped off the inner circumference C of the bore hole 21 by means of the guide pads 7,8 and are directed along the guide pads 7,8 to an outlet 17,18 of the guide pads. The outlets 17,18 of the guide pads 7,8 lead to the swarf channels 9,10, and the particles 23 being passed from the guide pads 7,8 to the swarf channels 9,10 are passed further on to the trailing helical flute 1, i.e. the helical flute "following" the guide pads when viewed in the circumferential machining direction R of the reaming tool.

In the embodiment shown, the swarf channels 9,10 are directed along a right-hand twist similar to the right-hand twist of the helical flutes 1 and of the guide pads 7,8. Thus, the direction of the particles 23 is also opposite to the longitudinal machining direction D due to the right-hand twist of the swarf channels 9,10. If the swarf channels had a left-hand twist, the particles would be directed in the same direction as the longitudinal machining direction D and would be passed further on to the leading helical flute, i.e. the helical flute "in advance of" the guide pads when viewed in the circumferential machining direction R of the reaming tool.

In the embodiments shown, the reaming tool is provided with additional reaming steps having a larger diameter than the initial reaming step having the smallest diameter. The additional reaming steps are also provided with high hardness cutting elements 3,4,5,6 soldered or brazed to the base body 12 of the reaming tool. The helical flutes 1 provided in the reaming tool extend all the way along the different reaming steps of the reaming tool. Thus, the helical flutes 1 are common to all the reaming steps of the reaming tool. Additional guide pads 8 (see fig. 2) are provided along at least one additional circumferential surface 14 (see fig. 2) between the initial reaming step and a subsequent additional reaming step, said additional circumferential surface having an enlarged diameter compared to the diameter of the circumferential surface along the initial reaming step of the reaming tool. The additional guide pads 8 have outlets 18 leading to an additional swarf channel 10 provided at the end of the additional reaming step.

In the embodiment shown, the even additional reaming steps having even larger diameters and the corresponding circumferential surface are neither provided with guide pads nor provided with swarf channels. However, depending on the influence to the machining process of the even additional reaming steps having even larger diameters, it may be possible to provide one or more of the even additional reaming steps with guide pads and possibly also with swarf channels. In contrast to such an approach of providing even additional guide pads and even additional swarf channels, it may be possible to omit both guide pads and swarf channels along the circumferential surface of the first additional reaming step.

Also, the guide pads and the swarf channels along the initial reaming step may possibly be omitted depending on the one or more of the following parameters, the material of the work-piece being machined, the diameter of the bore hole, the forces which the reaming tool is subjected to and possible other parameters influencing the reaming process. Thus, the one feature of soldering or brazing a previously manufactured high hardness cutting element to a previously manufactured body part of the reaming tool may be the essential feature. However, preferably, the provision of guide pads and possibly also swarf channels may also be seen as essential features of the invention.

Insertions of high hardness cutting elements angled to follow the helical flutes and combined with the guide pads result in a very fine surface quality of the bore hole. The scraping function of the guide pads clean the inner circumference of the bore hole during the machining process and promotes the creation of a so-called "mirror" surface.

Insertions of high hardness cutting elements angled to follow the helical flutes optimise chip flow along the helical flutes. It has been experienced that an increase of up to 50% in cutting parameters may be obtained when compared to conventional cutting tools having high hardness cutting elements. Even with an increase in cutting parameters, better surface quality, better hole roundness and tighter tolerances can be obtained compared to conventional cutting tools having high hardness cutting elements.

## Claims

1. A reaming tool with a reamer shaft and a reamer head on which reamer head at least one cutting element (2,3,4,5,6) is provided, said reamer head being manufactured from a base body (12) of a base material with a circumferential surface, and said base body (12) being provided with at least one substantially helical flute (2) with a helical twist and into said at least one helical flute at least one high hardness cutting element (2,3,4,5,6) is inserted, said at least one high hardness cutting element (2,3,4,5,6) being angled to follow the helical twist of the at least one helical flute (2), where said at least one high hardness cutting element (2,3,4,5,6) is attached to the base body by a joint consisting of brazing or soldering, **characterised in that** said reamer base body (12) is provided with at least one helical guide pad (7,8) being provided in the base material along said circumferential surface.

2. A reaming tool according to claim 1, in which said at least one high hardness cutting element (2,3,4,5,6) comprises at least one of the following materials: A Poly-Crystalline Diamond (PCD) material and a Cubic Boron Nitride (CBN) material.

3. A reaming tool according to any of the preceding claims, where said at least one helical flute (2) and said at least one helical guide pad (7,8) extends longitudinally along at least one of the following helical orientations: right-hand twist and left-hand twist.

4. A reaming tool according to any of the preceding claims, where a cross-section of said at least one helical flute (2), when viewed along a longitudinal extension of said at least one helical flute (2), is selected from at least one of the following geometries: semi-circular flutes, V-shaped flutes and right-angled flutes.

5. A reaming tool according to any of the preceding claims , where said at least one helical guide pad (7,8) extends longitudinally along at least one of the following twist conditions: right-hand twist and left-hand twist.

6. A reaming tool according to any of the preceding claims, where a cross-section of said at least one guide pad (7,8), when viewed along a longitudinal extension of said at least one helical guide pad (7,8), is selected from at least one of the following geometries: semi-circular guide pads, v-shaped guide pads and right-angled guide pads.

7. A reaming tool according to any of the preceding claims where at least two helical flutes (2) are provided, and where at least two helical guide pads (7,8) are provided, and where at least one first guide pad (7) is provided between said at least two helical flutes (2) along a first part of the circumferential surface, and where at least one other guide pad (8) is provided between said at least two helical flute (2) along a second part of the circumferential surface.

8. A reaming tool according to any of the preceding claims, where said reamer base body (12) is provided with at least one swarf channel being provided in the base material along said circumferential surface.

9. A reaming tool according to claim 8, where said at least one swarf channel (9,10) extends transversely along at least one of the following helical orientations: right-hand twist and left-hand twist.

10. A reaming tool according to any of claims 8-9, where a cross-section of said at least one swarf channel (9,10), when viewed along a longitudinal extension of said at least one swarf channel (9,10), is selected from at least one of the following geometries: semi-circular swarf channel, V-shaped swarf channel, rectangular swarf channel and trapezoidal swarf channel.

11. A reaming tool according to any of the claims 8-10, where at least two helical flutes (2) are provided, and where at least two swarf channels (9,10) are provided, and where at least one first swarf channel (9) is provided between said at least two helical flutes (2) along a first part of the circumferential surface, and where at least one other swarf channel (10) is provided between said at least two helical flutes (2) along a second part of the circumferential surface.

## Patentansprüche

1. Reibwerkzeug mit einem Reibschaft und einem Reibkopf, wobei an dem Reibkopf mindestens ein Schneidelement (2, 3, 4, 5, 6) vorgesehen ist, wobei der Reibkopf aus einem Grundkörper (12) aus einem Trägermaterial mit einer Umfangsfläche hergestellt ist, und wobei der Grundkörper (12) mit mindestens einer im Wesentlichen schraubenförmigen Spannut (2) mit einer schraubenförmigen Verdrehung versehen ist, und wobei in die mindestens eine schraubenförmige Spannut mindestens ein Schneidelement mit hoher Härte (2, 3, 4, 5, 6) eingesetzt ist, wobei das mindestens eine Schneidelement mit hoher Härte (2, 3, 4, 5, 6) derart gewinkelt ist, dass es der schraubenförmigen Verdrehung der mindestens einen schraubenförmigen Spannut (2) folgt, wobei das mindestens eine Schneidelement mit hoher Härte (2, 3, 4, 5, 6) über eine Verbindung bestehend aus Hartlöten oder Weichlöten am Grundkörper befestigt ist, **dadurch gekennzeichnet, dass** der Grundkörper (12) des Reibwerkzeugs mit mindestens einer schraubenförmigen Führungsleiste (7, 8) versehen ist, die im Trägermaterial entlang der Umfangsfläche vorgesehen ist.

2. Reibwerkzeug nach Anspruch 1, wobei das mindestens eine Schneidelement mit hoher Härte (2, 3, 4, 5, 6) mindestens einen der folgenden Werkstoffe umfasst: einen Werkstoff aus polykristallinem Diamant (PCD) und einen Werkstoff aus kubischem Bornitrid (CBN).

3. Reibwerkzeug nach einem der vorhergehenden Ansprüche, wobei sich die mindestens eine schraubenförmige Spannut (2) und die mindestens eine schraubenförmige Führungsleiste (7, 8) in Längsrichtung entlang mindestens einer der folgenden schraubenförmigen Ausrichtungen erstrecken: Rechtsverdrehung und Linksverdrehung.

4. Reibwerkzeug nach einem der vorhergehenden Ansprüche, wobei ein Querschnitt der mindestens einen schraubenförmigen Spannut (2), entlang einer Ausdehnung der mindestens einen schraubenförmigen Spannut (2) in Längsrichtung gesehen, ausgewählt ist aus mindestens einer der folgenden Geometrien: halbkreisförmige Spannuten, V-förmige Spannuten und rechtwinklige Spannuten.

5. Reibwerkzeug nach einem der vorhergehenden Ansprüche, wobei sich die mindestens eine schraubenförmige Führungsleiste (7, 8) in Längsrichtung entlang mindestens einem der folgenden Verdrehungszustände erstreckt: Rechtsverdrehung und Linksverdrehung.

6. Reibwerkzeug nach einem der vorhergehenden Ansprüche, wobei ein Querschnitt der mindestens einen Führungsleiste (7, 8), entlang einer Ausdehnung der mindestens einen schraubenförmigen Führungsleiste (7, 8) in Längsrichtung gesehen, ausgewählt ist aus mindestens einer der folgenden Geometrien: halbkreisförmige Führungsleisten, V-förmige Führungsleisten und rechtwinklige Führungsleisten.

7. Reibwerkzeug nach einem der vorhergehenden Ansprüche, wobei mindestens zwei schraubenförmige Spannuten (2) vorgesehen sind und wobei mindestens zwei schraubenförmige Führungsleisten (7, 8) vorgesehen sind und wobei mindestens eine erste Führungsleiste (7) zwischen den mindestens zwei schraubenförmigen Spannuten (2) entlang einem ersten Teil der Umfangsfläche vorgesehen ist und wobei mindestens eine andere Führungsleiste (8) zwischen den mindestens zwei schraubenförmigen Spannuten (2) entlang einem zweiten Teil der Umfangsfläche vorgesehen ist.

8. Reibwerkzeug nach einem der vorhergehenden Ansprüche, wobei der Grundkörper (12) des Reibwerkzeugs mit mindestens einer Spanabfallrinne versehen ist, die entlang der Umfangsfläche im Trägermaterial vorgesehen ist.

9. Reibwerkzeug nach Anspruch 8, wobei sich die mindestens eine Spanabfallrinne (9, 10) quer entlang mindestens einer der folgenden schraubenförmigen Ausrichtungen erstreckt: Rechtsverdrehung und Linksverdrehung.

10. Reibwerkzeug nach einem der Ansprüche 8-9, wobei ein Querschnitt der mindestens einen Spanabfallrinne (9, 10), entlang einer Ausdehnung der mindestens einen Spanabfallrinne (9, 10) in Längsrichtung gesehen, ausgewählt ist aus mindestens einer der folgenden Geometrien: halbkreisförmige Spanabfallrinnen, V-förmige Spanabfallrinnen, rechteckige Spanabfallrinnen und trapezförmige Spanabfallrinnen.

11. Reibwerkzeug nach einem der vorhergehenden Ansprüche, wobei mindestens zwei schraubenförmige Spannuten (2) vorgesehen sind und wobei mindestens zwei Spanabfallrinnen (9, 10) vorgesehen sind und wobei mindestens eine erste Spanabfallrinne (9) zwischen den mindestens zwei schraubenförmigen Spannuten (2) entlang einem ersten Teil der Umfangsfläche vorgesehen ist und wobei mindestens eine andere Spanabfallrinne (10) zwischen den mindestens zwei schraubenförmigen Spannuten (2) entlang einem zweiten Teil der Umfangsfläche vorgesehen ist.

## Revendications

1. Outil d'alésage possédant une tige d'alésoir et une tête d'alésoir, cette tête d'alésoir étant munie d'au moins un élément coupant (2, 3, 4, 5, 6), ladite tête d'alésoir étant fabriquée à partir d'un corps de base (12) constitué d'un matériau de base possédant une surface circonférentielle, et ledit corps de base (12) étant muni d'au moins une cannelure essentiellement hélicoïdale (2) présentant une torsion hélicoïdale, et au moins un élément coupant de haute dureté (2, 3, 4, 5, 6) étant inséré dans ladite au moins une cannelure hélicoïdale, ledit au moins un élément coupant de haute dureté (2, 3, 4, 5, 6) formant un angle pour suivre la torsion hélicoïdale de l'au moins une cannelure hélicoïdale (2), où ledit au moins un élément coupant de haute dureté (2, 3, 4, 5, 6) est relié au corps de base par un joint constitué d'une brasure ou d'une soudure, **caractérisé en ce que** ledit corps de base d'alésoir (12) est muni d'au moins un patin de guidage hélicoïdal (7, 8) qui est situé dans le matériau de base le long de ladite surface circonférentielle.

2. Outil d'alésage selon la revendication 1, où ledit au moins un élément coupant de haute dureté (2, 3, 4, 5, 6) comprend au moins l'un des matériaux suivants : matériau en diamant polycristallin (PCD) et matériau en nitrure de bore cubique (CBN).

3. Outil d'alésage selon l'une quelconque des revendications précédentes, où ladite au moins une cannelure hélicoïdale (2) et ledit au moins un patin de guidage hélicoïdal (7, 8) s'étendent longitudinalement le long d'au moins une des orientations hélicoïdales suivantes : torsion à droite et torsion à gauche.

4. Outil d'alésage selon l'une quelconque des revendications précédentes, où une section transversale de ladite au moins une cannelure hélicoïdale (2), vue le long d'une extension longitudinale de ladite au moins une cannelure hélicoïdale (2), est choisie parmi au moins une des géométries suivantes : cannelures semi-circulaires, cannelures en V et cannelures à angle droit.

5. Outil d'alésage selon l'une quelconque des revendications précédentes, où ledit au moins un patin de guidage hélicoïdal (7, 8) s'étend longitudinalement le long d'au moins un des états de torsion suivants : torsion à droite et torsion à gauche.

6. Outil d'alésage selon l'une quelconque des revendications précédentes, où une section transversale dudit au moins un patin de guidage (7, 8), vue le long d'une extension longitudinale dudit au moins un patin de guidage hélicoïdal (7, 8), est choisie parmi au moins une des géométries suivantes : patins de guidage semi-circulaires, patins de guidage en V et patins de guidage à angle droit.

7. Outil d'alésage selon l'une quelconque des revendications précédentes, muni d'au moins deux cannelures hélicoïdales (2), et muni d'au moins deux patins de guidage hélicoïdaux (7, 8), et où au moins un premier patin de guidage (7) est situé entre lesdites aux moins deux cannelures hélicoïdales (2) le long d'une première partie de la surface circonférentielle, et où au moins un autre patin de guidage (8) est situé entre lesdites au moins deux cannelures hélicoïdales (2) le long d'une deuxième partie de la surface circonférentielle.

8. Outil d'alésage selon l'une quelconque des revendications précédentes, où ledit corps de base d'alésoir (12) est muni d'au moins une rainure à copeaux qui est située dans le matériau de base le long de ladite surface circonférentielle.

9. Outil d'alésage selon la revendication 8, où ladite au moins une rainure à copeaux (9, 10) s'étend transversalement le long d'au moins une des orientations hélicoïdales suivantes : torsion à droite et torsion à gauche.

10. Outil d'alésage selon l'une quelconque des revendications 8 et 9, où une section transversale de ladite au moins une rainure à copeaux (9, 10), vue le long d'une extension longitudinale de ladite au moins une rainure à copeaux (9, 10), est choisie parmi au moins une des géométries suivantes : rainure à copeaux semi-circulaire, rainure à copeaux en V, rainure à copeaux rectangulaire et rainure à copeaux trapézoïdale.

11. Outil d'alésage selon l'une quelconque des revendications 8 à 10, muni d'au moins deux cannelures hélicoïdales (2), et muni d'au moins rainures à copeaux (9, 10), et où au moins une première rainure à copeaux (9) est située entre lesdites aux moins deux cannelures hélicoïdales (2) le long d'une première partie de la surface circonférentielle, et où au moins une autre rainure à copeaux (10) est située entre lesdites aux moins deux cannelures hélicoïdales (2) le long d'une deuxième partie de la surface circonférentielle.
